# EUROPÄISCHE PATENTANMELDUNG

(11) **EP 1 712 942 A1**
(43) Veröffentlichungstag der Anmeldung: **18.10.2006**
(21) Anmeldenummer: 05090102.4
(22) Anmeldetag: 13.04.2005
(51) Int. Cl.: G02B 6/43

(54) **Optisches Koppelelement zur stirnseitigen optischen Kopplung der Wellenleiter eines ersten zweidimensionalen Wellenleiterarrays mit den Wellenleitern eines zweiten zweidimensionalen Wellenleiterarrays sowie optische Koppelanordnung**

(71) Anmelder: Infineon Technologies Fiber Optics GmbH, 13629 Berlin (DE)
(72) Erfinder: Kropp, Jörg-Reinhardt, 12355 Berlin (DE)
(74) Vertreter: Müller, Wolfram Hubertus

(57) **Zusammenfassung**

Bezeichnung der Erfindung: Optisches Koppelelement zur stirnseitigen optischen Kopplung der Wellenleiter eines ersten zweidimensionalen Wellenleiterarrays mit den Wellenleitern eines zweiten zweidimensionalen Wellenleiterarrays sowie optische Koppelanordnung.

Die Erfindung betrifft ein optisches Koppelelement (3) zur stirnseitigen optischen Kopplung der Wellenleiter (11, 12) eines ersten zweidimensionalen Wellenleiterarrays mit mxn Wellenleitern mit den Wellenleitern (21, 22) eines zweiten zweidimensionalen Wellenleiterarrays mit mxn Wellenleitern, wobei m≥2 und n≥2 ist und wobei die stirnseitigen Enden (15, 24) der Wellenleiterarrays winklig zueinander angeordnet sind. Erfindungsgemäß weist das Koppelement (3) m parallel verlaufende Reihen (31, 32) von jeweils n Spiegelbereichen (310, 320) auf, wird das Licht des ersten Wellenleiterarrays durch die Spiegelbereiche (310, 320) auf das zweite Wellenleiterarry umgelenkt und ist dabei jeweils einem Wellenleiterpaar (11, 21; 12, 22) des ersten und des zweiten Wellenleiterarrays ein Spiegelbereich (310, 320) zur Lichtkopplung zugeordnet. Des weiteren betrifft die Erfindung eine Koppelanordnung mit zwei zweidimensionalen Wellenleiterarrays und einem derartigen Koppelelement.

## Beschreibung

Die Erfindung betrifft ein optisches Koppelelement zur stirnseitigen optischen Kopplung der Wellenleiter eines ersten zweidimensionalen Wellenleiterarrays mit den Wellenleitern eines zweiten zweidimensionalen Wellenleiterarrays gemäß dem Oberbegriff des Anspruchs 1 sowie eine optische Koppelanordnung mit zwei zweidimensionalen Wellenleiterarrays und einem optischen Koppelelement.

Aufgrund schnell steigender Übertragungsraten in der Kommunikationstechnik werden zunehmend Daten über parallele Verbindungen übertragen. Im Bereich optischer und optoelektronischer Übertragungsverfahren werden Daten dabei parallel über eine Mehrzahl von optischen Kanälen übertragen. Dies führt bei der Verwendung optischer Leiterplatten dazu, dass in die Leiterplatten zwei oder mehrere optische Lagen von Lichtwellenleitern integriert werden, wobei jede optische Lage ein eindimensionales Array von Lichtwellenleitern umfasst. Derartige optische Leiterplatten können beispielsweise in Schaltschränken eingesetzt werden, in denen hohe Übertragungsraten zu realisieren sind und ein hohes Maß an optischer Parallelität der Datenübertragungswege vorteilhaft ist.

Allgemein besteht das Problem, zwei zweidimensionale Wellenleiterarrays optisch miteinander zu koppeln, wenn diese winklig, insbesondere senkrecht zueinander ausgerichtet sind. Ein solches Problem besteht z.B. bei der Koppelung einer Leiterplatte, die ein zweidimensionales Wellenleiterarray (auch als 2D-Leiterplatte bezeichnet) aufweist, mit einer 2D-Backplane-Leiterplatte beispielsweise eines Schaltungsschranks. Ein weiterer Anwendungsfall besteht in der Kopplung eines optischen Sende- oder Empfangsmoduls mit zweidimensional angeordneten optischen Sendern oder Empfängern an eine 2D-optische Leiterplatte. Ein dritter Anwendungsfall besteht in der Koppelung elektronischer Baugruppen (z. B. elektronischer Chips) mit zweidimensional angeordneten optischen Ein- und/oder Ausgängen an zweidimensionale optische Wellenleiterarrays.

Im Stand der Technik ist es bekannt, Board-zu-Board-Verbindungen elektrisch über hochdichte, zweidimensionale Rückwandstecker und eine aufwendige elektrische Verdrahtung über die Rückwand eines Gestellschrankes zu realisieren. Optische Verbindungen sind dagegen bisher nur für eindimensionale Arrays bekannt, wodurch die Zahl der zur Verfügung stehenden Kanäle begrenzt ist. Eine eindimensionale optische Koppelung der Kanäle eines Bauelements an ein Array von planaren Wellenleitern auf oder in einer Leiterplatte ist beispielsweise in der DE-A-100 43 353, der US 6,097,864, der EP-A-1 285 295, der DE-A-192 39 575, der US 6,257,771 und der US 6,370,292 beschrieben. Dabei werden entweder planare Wellenleiter mit integrierten Spiegeln zur senkrechten Aus- und Einkoppelung eingesetzt oder technische Lösungen mit senkrecht verlaufenden Stirnflächen der Lichtwellenleiter realisiert.

Die DE-A-102 38 741 beschreibt eine mehrlagige planare optische Komponente mit einer Vielzahl von Lichtenwellenleitern, bei der jedem Lichtwellenleiter eine Umlenkvorrichtung zugeordnet ist und die Umlenkvorrichtungen in der Projektion auf eine Ebene parallel zur Oberfläche der planaren optischen Komponente ein zweidimensionales Raster bilden. Spezielle Linsenarrays ermöglichen eine Kopplung des Lichts mit weiteren Komponenten.

Der vorliegenden Erfindung liegt die Aufgabe zugrunde, ein Koppelelement sowie eine Koppelanordnung zur Verfügung zu stellen, die in einfacher Weise eine optische Koppelung zwischen den Lichtwellenleitern eines ersten zweidimensionalen Wellenleiterarrays und den Lichtleitern eines zweiten zweidimensionalen Wellenleiterarrays zur Verfügung stellen, die winkelig, insbesondere senkrecht zueinander ausgerichtet sind.

Diese Aufgabe wird erfindungsgemäß durch ein optisches Koppelelement mit den Merkmalen des Anspruchs 1 und eine optische Koppelanordnung mit den Merkmalen des Anspruchs 18 gelöst. Bevorzugte und vorteilhafte Ausgestaltungen der Erfindung sind in den Unteransprüchen angegeben.

Danach zeichnet sich die erfindungsgemäße Lösung dadurch aus, dass das optische Koppelelement m parallel verlaufende Reihen von jeweils n Spiegelbereichen aufweist, wobei n und m größer oder gleich zwei sind. Das Licht des ersten Wellenleiterarrays wird durch die Vielzahl der Spiegelbereiche auf das zweite Wellenleiterarry umgelenkt. Dabei ist jeweils einem Wellenleiterpaar des ersten und des zweiten Wellenleiterarrays ein Spiegelbereich zur Lichtkopplung zugeordnet. Die Erfindung stellt ein spezielles Koppelelement zur Verfügung, dass an die Enden der Lichtwellenleiter eines zweidimensionalen Arrays angesetzt werden kann und für sämtliche Lichtwellenleiter eine Lichtkopplung mit jeweils zugeordneten Lichtwellenleitern eines winklig angeordneten weiteren zweidimensionalen Arrays erlaubt.

Das Koppelelement weist bevorzugt eine erste Ein-/Auskoppelfläche, die mit dem stirnseitigen Ende des ersten Wellenleiterarrays koppelbar ist, und eine zweite Ein-/Auskoppelfläche auf, die mit dem stirnseitigen Ende des zweiten Wellenleiterarrays koppelbar ist. Der Winkel zwischen der ersten und der zweiten Ein-/Auskoppelfläche ist gleich dem Winkel, in dem die Wellenleiter der beiden Wellenleiterarrays zueinander angeordnet sind und liegt bevorzugt bei 90°.

In einer bevorzugten Ausgestaltung bilden die Spiegelbereiche mindestens einer der Reihen abbildende Spiegel, die zusätzlich zu einer Strahlumlenkung den umgelenkten Strahl auf einen zugeordneten Wellenleiter fokussieren. Aufgrund der Apertur der involvierten Wellenleiter führt eine ausschließliche Reflexion des Lichts an den Spiegelbereichen in der Regel zu starken Koppelverlusten. Eine Ausnahme liegt nur dann vor, wenn der Abstand zwischen den jeweiligen Wellenleiter-Stirnflächen und dem Spiegelbereich sehr klein ist. Die Ausbildung der Spiegelbereiche als abbildende Spiegel reduziert die Koppelverluste, indem das Licht auf die jeweilige Wellenleiter-Stirnfläche fokussiert wird.

Die abbildenden Spiegel können dabei beispielsweise jeweils durch einen lokal gekrümmten Bereich an einer Oberfläche des Koppelelements gebildet sein. In einer ersten Ausgestaltung sind die abbildenden Spiegel einer der Reihen jeweils durch einen nach außen konkav gekrümmten Bereich an einer Oberfläche des Koppelelements gebildet. In einer zweiten Ausgestaltung sind die abbildenden Spiegel mindestens einer der Reihen jeweils durch einen nach außen konvex gekrümmten Bereich an einer (anderen) Oberfläche des Koppelelements gebildet. Die gekrümmten Bereiche können dabei für das zu reflektierende Licht als Hohlspiegel ausgebildet sein, der z.B. eine sphärische Form realisiert oder in Form eines Rotationsparaboloiden gebildet ist.

Bevorzugt sind die m Reihen von n Spiegelbereichen an mindestens einer Oberfläche des Koppelelements ausgebildet sind. In einer ersten Ausführungsvariante bildet das Koppelelement an einer ersten außenliegenden Oberfläche eine erste Reihe von n Spiegelbereichen und an einer zweiten außenliegenden Oberfläche mindestens eine zweite Reihe von n Spiegelbereichen aus, wobei die Spiegelbereiche der ersten Reihe eine Lichtumlenkung bewirken, ohne dass das Licht in das Koppelelement eintritt und die Spiegelbereiche der zweiten Reihe eine Lichtumlenkung bewirken, nachdem das Licht in das Koppelelement eingetreten ist. Dabei sind die Spiegelbereiche der ersten Reihe bevorzugt jeweils durch einen nach außen konkav gekrümmten Bereich der ersten außenliegenden Oberfläche und die Spiegelbereiche der zweiten Reihe jeweils durch einen nach außen konvex gekrümmten Bereich der zweiten außenliegenden Oberfläche gebildet.

In einer zweiten Ausführungsvariante sind die Spiegelbereiche der ersten Reihe durch ebene Spiegel gebildet, die zum Beispiel durch eine ebene Phase der ersten außenliegenden Oberfläche realisiert werden, während die Spiegelbereiche der zweiten Reihe jeweils durch einen nach außen konvex gekrümmten Bereich der zweiten außenliegenden Oberfläche gebildet sind. Die ebene Phase kann dabei durchgehend ausgebildet sein, d.h. sämtliche Spiegelbereiche der einen Reihe werden durch die eine Phase gebildet.

In einer dritten Ausführungsvariante bildet das Koppelelement an einer außenliegenden Oberfläche mindestens zwei beabstandete Reihen von n Spiegelbereichen aus, wobei die Spiegelbereiche jeweils eine Lichtumlenkung bewirken, nachdem das Licht in das Koppelelement eingetreten ist. Die Spiegelbereiche sind jeweils durch einen nach außen konvex gekrümmten Bereich der außenliegenden Oberfläche gebildet.

Das Koppelelement besteht bevorzugt aus einem monolithischen Block und dabei aus einem transparenten Kunststoff, wobei grundsätzlich jedoch auch eine Mehrteiligkeit und die Verwendung anderer transparenter Materialien möglich sind. In einer bevorzugten Ausgestaltung ist m gleich zwei und n gleich zwölf, so dass zwei 2x12 Arrays gekoppelt werden.

Die Erfindung betrifft auch eine optische Koppelanordnung mit einem ersten zweidimensionalen Wellenleiterarray mit mxn Wellenleitern, einem zweiten zweidimensionalen Wellenleiterarray mit mxn Wellenleitern, wobei m≥2 und n≥2 ist und die stirnseitigen Enden der Wellenleiterarrays winklig zueinander angeordnet sind, sowie einem Koppelelement nach Anspruch 1.

Dabei ist bevorzugt zwischen der einen Ein-/Auskoppelfläche des Koppelelements und der ebenen Stirnseite des einen Wellenleiterarrays und der anderen Ein-/Auskoppelfläche des Koppelelements und der ebenen Stirnseite des zweiten Wellenleiterarrays jeweils ein Immersionsmittel vorgesehen. Hierbei handelt es sich beispielsweise um einen Kleber oder ein transparentes Vergussmaterial. Das Immersionsmittel schützt die optischen Pfade vor Staub und Verschmutzung, stellt einen optischen Ausgleich von Unregelmäßigkeiten an den involvierten Wellenleiterstirnflächen bereit und fixiert darüberhinaus das Koppelelement hinsichtlich seiner Lage.

Das Koppelelement kann als separates Teil ausgebildet sein. Ebenso ist es möglich, dass es Teil einer Koppeleinheit oder eines Funktionsteils ist, das das erste oder das zweite Wellenleiterarray umfasst.

Das erste und/oder das zweite Wellenleiterarray sind in bevorzugten Ausgestaltungen in einer mehrlagigen optischen Leiterplatte, in einem optischen Sende- oder Empfangsmodul mit zweidimensional angeordneten optischen Sendern und/oder Empfängern, oder in einer elektrischen Baugruppe mit mit zweidimensional angeordneten optischen Ein- und/oder Ausgängen realisiert.

Die Erfindung wird nachfolgend unter Bezugnahme der Figuren der Zeichnungen anhand mehrerer Ausführungsbeispiele näher erläutert. Es zeigen:
- Figur 1: schematisch ein erstes Ausführungsbeispiel einer Koppelanordnung zur Kopplung zweier zweidimensionaler Wellenleiterarrays;
- Figur 2: schematisch ein zweites Ausführungsbeispiel einer Koppelanordnung zur Kopplung zweier zweidimensionaler Wellenleiter-Arrays;
- Figur 3: schematisch ein drittes Ausführungsbeispiel einer Koppelanordnung zur Kopplung zweier zweidimensionaler Wellenleiter-Arrays;
- Figur 4: eine perspektivische Ansicht eines konkreten Ausführungsbeispiels eines Koppelelements und eines mit diesem verbundenen Funktionselements entsprechend der Ausgestaltung der Fig. 2; und
- Figur 5: einen Ausschnitt der Figur 4.

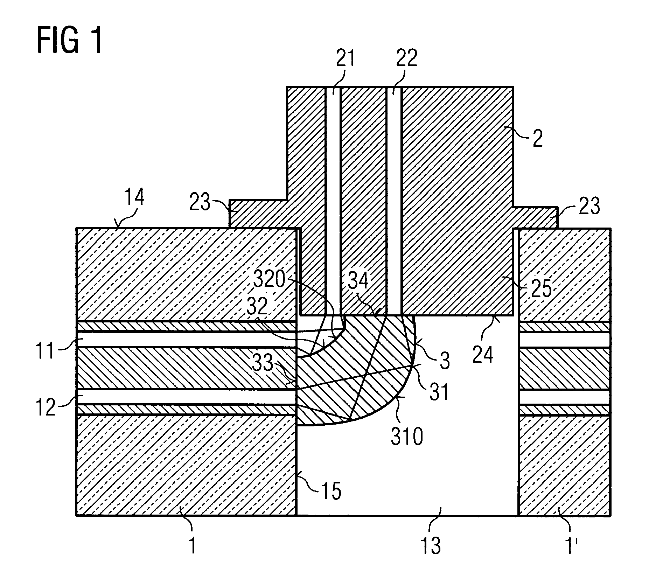

Die Figur 1 zeigt eine Koppelanordnung mit einer zweilagigen optischen Leiterplatte 1, einem wellenleitenden Funktionsteil 2 und einem optischen Koppelelement 3 zur optischen Kopplung von optischer Leiterplatte 1 und Funktionselement 2.

Die optische Leiterplatte 1 ist als zweilagige optische Leiterplatte ausgebildet, die in zwei übereinander angeordneten, parallel zueinander verlaufenden Lagen jeweils ein eindimensionales Array von n Lichtwellenleitern 11, 12 aufweist, von denen die Schnittdarstellung der Figur 1 jeweils einen Lichtwellenleiter 11, 12 zeigt. Die anderen Lichtwellenleiter 11, 12 befinden sich vor bzw. hinter der Zeichenebene. Die optische Leiterplatte 1 weist somit 2xn Wellenleiter auf, die ein zweidimensionales Wellenleiter-Array bilden. Sofern die Leiterplatte allgemein m Lagen von Wellenleitern aufweist, wobei m größer gleich 2 ist, so weist die Leiterplatte ein Wellenleiter-Array von mxn Wellenleitern auf.

Die einzelnen Wellenleiter sind in der optischen Leiterplatte 1 in an sich bekannter Weise bevorzugt integriert optisch ausgebildet.

Das Funktionselement 2 weist ebenfalls zwei beabstandete Lagen von einem jeweils eindimensionalen Array von n Lichtwellenleitern 21, 22 auf, wobei die Schnittdarstellung der Figur 1 wiederum nur jeweils einen der Lichtwellenleiter 21, 22 jeder Lage zeigt. Sofern allgemein m-Lagen von Lichtwellenleitern vorgesehen sind, so weist auch das Funktionselement 2 ein Wellenleiter-Array mit mxn-Wellenleitern auf.

Bei dem Funktionselement 2 handelt es sich beispielsweise um einen Teil oder Teilbereich einer weiteren zweidimensionalen Leiterplatte, um einen Teil oder Teilbereich eines zweidimensionalen optischen Sende- und/oder Empfangsmoduls, um einen Teil oder Teilbereich einer elektrischen Baugruppe mit optischen Eingängen und/oder Ausgängen, oder um einen Teil oder Teilbereich einer Koppeleinheit, die mit einem weiteren Funktionselement verbunden ist.

Die Figuren 1 bis 3 gehen auf die konkrete Ausbildung und die Funktionalität des Funktionselementes 2 bzw. von mit dem Funktionselement 2 verbundenen Modulen und Baugruppen nicht näher ein, da es vorliegend allein auf die Kopplung zwischen den jeweiligen Lichtwellenleiter der beiden zweidimensionalen Arrays von optischer Leiterplatte 1 und Funktionselement 2 ankommt. Es wird also im Folgenden allein die dargestellte Anordnung betrachtet, unabhängig von der Frage, wohin die jeweils dargestellten Wellenleiter führen und über welche Mechanismen Licht welcher Bauelemente und Module ein- und/oder ausgekoppelt wird. Die vorliegende Erfindung sieht diesbezüglich keinerlei Einschränkungen vor.

Die optische Leiterplatte 1 und das Funktionselement 2 sind derart zueinander angeordnet, dass die jeweiligen Lichtwellenleiter 11, 12, 21, 22 im Wesentlichen senkrecht zueinander verlaufen. Die optische Leiterplatte 1 weist eine Aussparung 13 auf, in die ein Teilbereich 25 des Funktionselementes 2 hineinragt. Das Funktionselement 2 weist dabei seitliche Vorsprünge 23 auf, mit denen es sich auf der Oberfläche 14 der optischen Leiterplatte 1 abstützt. Die Abstützung ist dabei lediglich schematisch dargestellt und kann auf vielfältige Weise erfolgen.

Dabei wird darauf hingewiesen, dass die Dicke der Leiterplatte 1 aufgrund von Toleranzen der Leiterplattenherstellungstechnik teilweise erheblich variieren kann. Es erfolgt daher nach Anbringen des Funktionselements 2 (und des bevorzugt mit diesem bereits verbundenen Koppelelements 3) an der Leiterplatte 1 bevorzugt zunächst eine Justage, insbesondere aktive Justage, in Bezug auf die Leiterplatte 1 zur Ausrichtung der jeweiligen Wellenleiter. Im justierten Zustand wird das Funktionselement 2 dann beispielsweise durch einen Kleber gegenüber der Leiterplatte 1 fixiert.

Die Aussparung 13 der Leiterplatte 1 legt das Wellenleiter-Array mit den 2xn-Wellenleitern 11, 12 frei, wobei die Endflächen der Wellenleiter 11, 12 senkrecht zur Oberfläche 14 der Leiterplatte stehen und im Wesentlichen senkrecht zur Längsausdehnung der Wellenleiter 11, 12 verlaufen. Die Wellenleiter 11, 12 des zweidimensionalen Arrays enden dabei an einer Stirnseite 15 der optischen Leiterplatte, die durch die Aussparung 13 bereitgestellt wird.

Es ist allerdings ebenfalls möglich, dass die Stirnseite 15 das seitliche Ende der optischen Leiterplatte angibt, wobei das Koppelelement 3 sich dann an das stirnseitige Ende der optischen Leiterplatte anschließen würde. Der in der Figur 1 dargestellte weitere Teilbereich 1' der Leiterplatte wäre für diesen Fall lediglich als Stützelement ohne Wellenleiter ausgebildet. Auch ist es möglich, dass bei einer Befestigung des Koppelelements 3 an einer Kante der Leiterplatte 1 dieses und das Funktionselement 2 einseitig an der Leiterplatte 1 befestigt werden, beispielsweise über einen verlängerten Vorsprung 23.

In entsprechender Weise weist auch das Funktionselement 2 eine Stirnseite 24 auf, an der die Stirnflächen der Wellenleiter 21, 22 des weiteren zweidimensionalen Wellenleiterarrays freiliegen.

Das Koppelelement 3 bewirkt nun eine optische Kopplung zwischen den Lichtwellenleitern 11, 12 des zweidimensionalen Lichtwellenleiter-Arrays der optischen Leiterplatte 1 und den Lichtwellenleitern 21, 22 des zweidimensionalen optischen Wellenleiter-Arrays des Funktionselementes 2, die winklig, im dargestellten Ausführungsbeispiel unter einem Winkel von 90° zueinander angeordnet sind. Alternativ kann auch ein anderer Winkel als 90° vorgesehen sein, wobei ein Winkel von 90° jedoch bevorzugt verwendet wird.

Das optische Koppelelement 3 ist gemäß der Figur 1 als separates Teil ausgebildet. Grundsätzlich kann es aber auch Teil des Funktionselementes 2 oder einer Koppeleinheit sein, das mit einem Funktionselement gekoppelt wird. Beispielsweise kann es einstückig mit dem Funktionselement 2 der Figur 1 ausgebildet sein, wobei dieses dann eine Koppeleinheit für ein weiteres Funktionselement wie ein optisches Modul oder eine elektrische Baugruppe darstellen kann.

Das Koppelelement 3 besteht aus einem transparentem Kunststoff oder einem anderen für die betrachteten Wellenlängen transparenten Material. Es weist eine erste Ein-/Auskoppelfläche 33, die mit der Stirnseite 15 der optischen Leiterplatte 1 gekoppelt ist und eine zweite Ein-/Auskoppelfläche 34 auf, die mit der Stirnseite 24 des Funktionselementes 2 gekoppelt ist. Die beiden Ein-/Auskoppelflächen 33, 34 des Koppelelementes 3 sind dabei unter einem Winkel zueinander angeordnet, der dem Winkel entspricht, in dem die optische Leiterplatte 1 und das Funktionselement 2 zueinander angeordnet sind; im betrachteten Ausführungsbeispiel beträgt dieser Winkel somit 90°.

Die Ein-/Auskoppelflächen 33, 34 grenzen im Ausführungsbeispiel der Fig. 1 nur an eine der beiden Lagen von Lichtwellenleitern 12, 22 an, so dass das Licht dieser Wellenleiter in das Koppelelement 3 eingekoppelt wird, während das Licht der anderen Lagen 11, 21 nicht in das Koppelelement eingekoppelt wird, vielmehr an einer Oberfläche des Koppelelementes reflektiert wird, ohne in dieses einzutreten, wie noch erläutert werden wird.

Das Koppelelement 3 weist an gegenüberliegenden Seiten zwei gekrümmte Oberflächenbereiche 31, 32 auf, die sich (senkrecht zur Zeichenebene) längs erstrecken. In diesen Oberflächenbereichen 31, 32 sind jeweils eine Mehrzahl von in eine Reihe angeordneten Spiegelbereichen 310, 320 realisiert, wobei jeder Spiegelbereich einem Lichtwellenleiter 11, 21 der optischen Leiterplatte und des Funktionselementes 2 zugeordnet ist. Zumindest im Bereich der Spiegelbereiche 310, 320 ist der Oberflächenbereich dabei metallisiert. Es wird darauf hingewiesen, dass die Schnittdarstellung der Fig. 1 jeweils nur einen der Spiegelbereiche 310, 320 zeigt.

Die Spiegelbereiche 320 des Oberflächenbereichs 32 sind äußerlich konkav gekrümmt (bilden somit Hohlspiegel) und fokussieren jeweils die Strahlung eines Lichtwellenleiters 11 der oberen Lage der Wellenleiter der optischen Leiterplatte 1 nach einer 90° Umlenkung auf die Stirnfläche des zugeordneten Wellenleiters 21 der entsprechenden Lage des Funktionselementes 2. Die Strahlung tritt dabei nicht in den Körper des Koppelelementes 3 ein.

Die Spiegelbereiche 310 des dem ersten Oberflächenbereich 32 gegenüberliegende Oberflächenbereichs 31 sind nach außen konvex ausgeformt und bilden ebenfalls abbildende Spiegel. Dabei ist jeder Spiegelbereich 320 einem Lichtwellenleiter 12, 22 der optischen Leiterplatte 1 und des Funktionselementes 2 zugeordnet. Die aus einem Lichtwellenleiter 12 der unteren Lage des zweidimensionalen Arrays der Leiterplatte 1 austretende Strahlung tritt zunächst in das transparente Koppelelement 3 ein, wird dann im Koppelelement durch den zugehörigen abbildenden Spiegelbereich 310 um 90° umgelenkt und tritt dann aus dem Koppelelemente wieder aus, wobei es auf die korrespondierenden Wellenleiter 22 der zweiten Lage bzw. des zweiten Arrays des Funktionselementes fokussiert wird. Der jeweilige Strahlengang ist in der Fig. 1 schematisch dargestellt.

Senkrecht zu der Zeichenebene realisiert das Koppelelement 3 wie erläutert n derartige Spiegelbereiche 310, 320 in den beiden Oberflächenbereichen 31, 32, so dass zwei parallel verlaufende Reihen von jeweils n Spiegelbereichen bereitgestellt werden. Somit ermöglicht das Koppelelement 3 eine komplette Übertragung sämtlicher Kanäle von dem ersten Wellenleiterarray der Leiterplatte 1 mit 2xn Wellenleitern zu dem zweiten Wellenleiterarray des Funktionselementes 2 mit 2xn Wellenleitern. Die Koppelung für sämtliche Kanäle ist dabei mit Vorteil als 1:1 Abbildung ausgeführt, da die Abstände zwischen den Wellenleitern und der zugehörigen Spiegelfläche jeweils gleich sind. Auch wird auch eine sehr gute Kanaltrennung zwischen den beiden Spiegelreihen der Oberflächenbereiche 31, 32 realisiert.

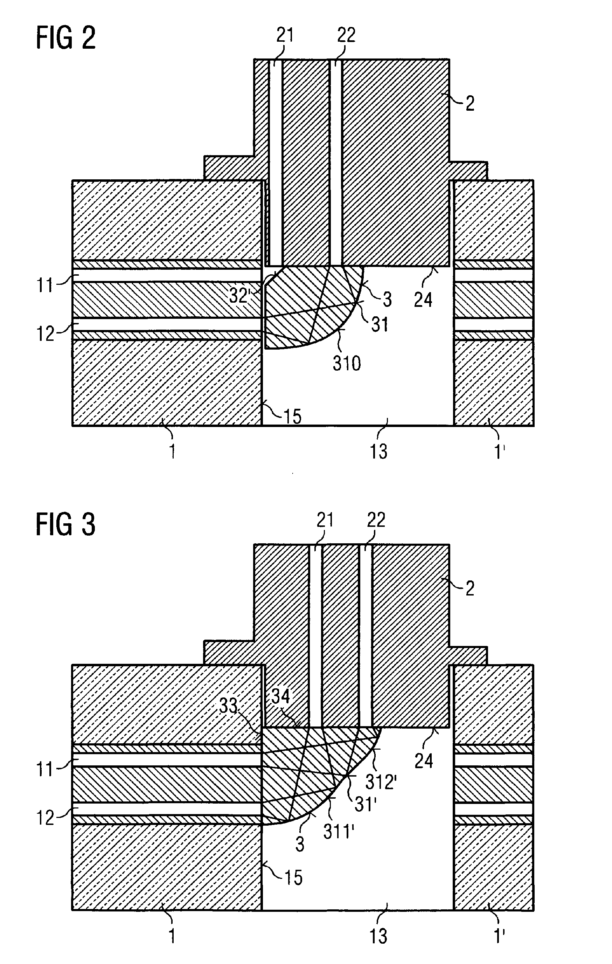

Die Fig. 2 zeigt ein zweites Ausführungsbeispiel, bei dem der eine Oberflächenbereich 32' des Koppelelementes 3 als ebene Phase ausgebildet ist, die unter dem Winkel von 45° zur Oberfläche 14 der Leiterplatte 1 verläuft. Die ebene Phase 32' realisiert dabei sämtliche Spiegelbereiche der einen Reihe. Der zweite Oberflächenbereich 31 ist entsprechend der Fig. 1 mit einer Mehrzahl von Spiegelflächen ausgebildet.

Diese Ausgestaltung funktioniert nur für den Fall, dass die Wellenleiter 11, 21 der enger beabstandeten ersten Reihen der Wellenleiterarrays so dicht zueinander angeordnet sind, dass die Überkoppelung durch den unter einem Winkel von 45° ausgebildeten planen Spiegel 32' realisiert werden kann. Für die Koppelung der zweiten Reihen von Lichtwellenleitern 12, 22 der Arrays wird aber wegen des größeren Abstandes wieder ein abbildender gekrümmter Spiegel benötigt, wie in Bezug auf die Fig. 1 erläutert.

In dem Ausführungsbeispiel der Fig. 3 wird das Licht beider Reihen von Lichtwellenleitern 11, 12 in das Koppelelement 3 ein- oder ausgekoppelt. Dazu weist das Koppelelement 3 eine im Schnitt näherungsweise dreieckige Form auf, wobei zwei der entsprechenden Oberflächen 33, 34 an die Stirnseiten 15, 24 von Leiterplatte 1 und Funktionselement 2 grenzen. Der verbleibende, schräg verlaufende Oberflächenbereich 31' realisiert zwei Reihen von jeweils n Spiegelbereichen 311', 312', die in zwei übereinander liegenden und dabei seitlich versetzten Teilbereichen des Oberflächenbereichs 31' ausgebildet sind.

Auch bei dieser Ausgestaltung weisen die Spiegelbereiche 311', 312' jeweils eine nach außen konvexe Form aus. Die Strahlen sämtlicher Wellenleiter 11, 12 des ersten Wellenleiterarrays der optischen Leiterplatte 1 treten in den transparenten Körper des Koppelelementes 3 ein und werden an jeweils zugeordneten Spiegelbereichen 311', 312' abbildend reflektiert, worauf sie in den Körper des Koppelelementes 3 mit einer Fokussierung auf die entsprechenden Wellenleiter 21, 22 des zweiten Wellenleiterarrays verlassen.

Die in der Fig. 3 dargestellte Anordnung weist den Vorteil auf, dass nur eine Seite 31' des Koppelelementes 3 mit Arrays aus gekrümmten Spiegelflächen versehen werden muss und dementsprechend auch nur dort eine Metallisierung vorgenommen werden muss. Hierdurch wird die Herstellung des Koppelelementes vereinfacht. Nachteilig erfolgt keine 1:1 Abbildung aufgrund der nichtsymmetrischen Strahlenverläufe.

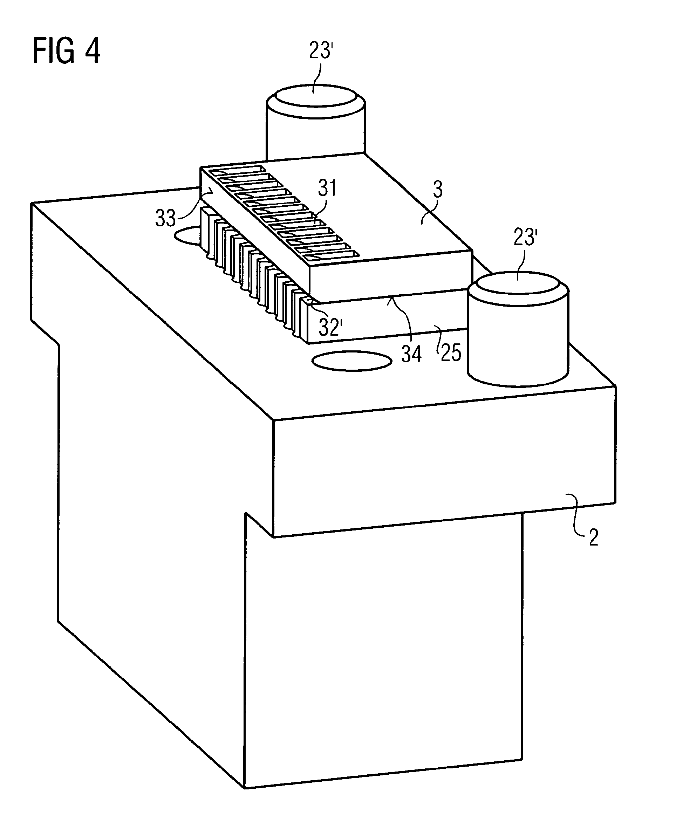

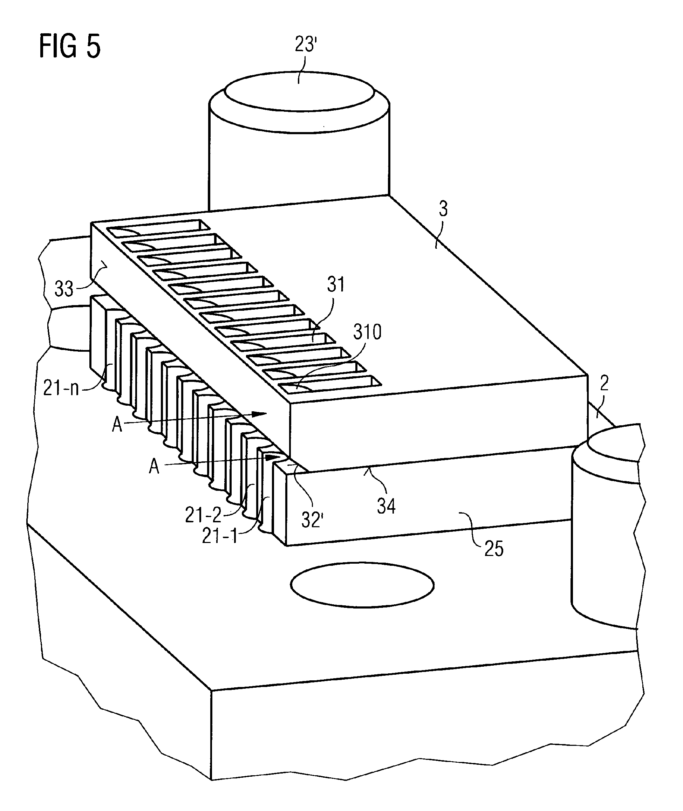

Die Figuren 4 und 5 zeigen eine perspektivische Ansicht eines konkreten Ausführungsbeispiels eines Koppelelements 3 und eines mit diesem verbundenen Funktionselements 2 entsprechend der Ausgestaltung der Fig. 2. Es sind zu erkennen das Funktionselement 3 mit den Ein-/Auskoppelflächen 33, 34, der ebenen Phase 32', die der eine Oberflächenbereich des Koppelelements 3 ausbildet, und den nach außen konvex ausgeformten Spiegelbereiche 310 des anderen Oberflächenbereichs 31. Die Lichtwellenleiter 11, 12 der Leiterplatte (nicht dargestellt) werden in Richtung der Pfeile A angekoppelt.

Das Funktionselement 2 weist einen in Bezug auf die Fig. 1 bereits erwähnten vorstehenden Teilbereich 25 auf, der in die entsprechende Aussparung 13 der Leiterplatte hineinragt (vgl. Fig. 2). Es sind an dem vorstehenden Teilbereich ein eindimensionales Array von n Lichtwellenleitern 21-1, ..., 21-n zu erkennen, die sich im Inneren des Funktionselements 2 fortsetzen, entsprechend den Wellenleitern 21 der Fig. 2. Das zweite Array mit Wellenleitern 22 ist durch das Koppelelement 3 abgedeckt und nicht zu erkennen.

Das Funktionselement 2 weist statt der Vorsprünge der Fig. 2 Zapfen 23' auf, die formschlüssig in entsprechende Löcher der Leiterplatte einsetzbar sind und dabei einer Befestigung und Positionierung des Funktionselements 2 dienen.

In sämtlichen dargestellten Ausführungsbeispielen ist es vorteilhaft, wenn das Koppelelement 3 zusammen mit einem Verguss oder Kleber eingesetzt wird, der auch als Immersionsmittel wirkt. Ein solches Immersionsmittel übernimmt folgende Funktionen: erstens den Schutz der optischen Pfade vor Staub und Verschmutzung; zweitens einen optischen Ausgleich von Unregelmäßigkeiten an den Wellenleiterstirnflächen, die durch die begrenzte Qualität der Oberflächenbearbeitung der Leiterplatte vorliegen können (beispielsweise bei einem Ausfräsen der Aussparung 13 aus der optischen Leiterplatte 1); drittens eine Fixierung der Lage des Koppelelementes bzw. einer mit dem Koppelelement verbundenen Koppeleinheit.

Die dargestellte Anordnung ermöglicht eine optische Kopplung zwischen zweidimensionalen Arrays von Lichtwellenleitern, die winkelig zueinander angeordnet sind, ohne dass in die Wellenleiter Spiegel oder andere Umlenkmittel integriert werden müssen. Vielmehr wird ein bevorzugt monolithisch ausgebildetes Koppelelement eingesetzt, das für eine Lichtumlenkung sämtlicher Lichtwellenleiter beider Arrays sorgt. Dies vereinfacht speziell für mehrlagige optische Leiterplatten mit integrierten Wellenleitern die Herstellung und Präparation der Ausgangsflächen.

## Patentansprüche

1. Optisches Koppelelement (3) zur stirnseitigen optischen Kopplung der Wellenleiter (11, 12) eines ersten zweidimensionalen Wellenleiterarrays mit mxn Wellenleitern mit den Wellenleitern (21, 22) eines zweiten zweidimensionalen Wellenleiterarrays mit mxn Wellenleitern, wobei m≥2 und n≥2 ist und wobei die stirnseitigen Enden (15, 24) der Wellenleiterarrays winklig zueinander angeordnet sind,
**dadurch gekennzeichnet, dass**
- das Koppelement (3) m parallel verlaufende Reihen (31, 32) von jeweils n Spiegelbereichen (310, 320) aufweist,
- das Licht des ersten Wellenleiterarrays durch die Spiegelbereiche (310, 320) auf das zweite Wellenleiterarry umgelenkt wird und dabei
- jeweils einem Wellenleiterpaar (11, 21; 12, 22) des ersten und des zweiten Wellenleiterarrays ein Spiegelbereich (310, 320) zur Lichtkopplung zugeordnet ist.

2. Koppelelement nach Anspruch 1, **gekennzeichnet durch** eine erste Ein-/Auskoppelfläche (33), die mit dem stirnseitigen Ende (15) des ersten Wellenleiterarrays koppelbar ist und eine zweite Ein-/Auskoppelfläche (34), die mit dem stirnseitigen Ende (24) des zweiten Wellenleiterarrays koppelbar ist.

3. Koppelelement nach Anspruch 2, **dadurch gekennzeichnet , dass** der Winkel zwischen der ersten und der zweiten Ein-/Auskoppelfläche (33, 34) 90° beträgt.

4. Koppelelement nach mindestens einem der Ansprüche 1 bis 3, **dadurch gekennzeichnet , dass** die Spiegelbereiche (310, 320) mindestens einer der Reihen abbildende Spiegel bilden, die zusätzlich zu einer Strahlumlenkung den umgelenkten Strahl auf einen zugeordneten Wellenleiter fokussieren.

5. Koppelelement nach Anspruch 4, **dadurch gekennzeichnet, dass** die abbildenden Spiegel (310, 320) jeweils durch einen lokal gekrümmten Bereich an einer Oberfläche (31, 32) des Koppelelements gebildet sind.

6. Koppelelement nach Anspruch 5, **dadurch gekennzeichnet, dass** die abbildenden Spiegel (320) einer der Reihen jeweils durch einen nach außen konkav gekrümmten Bereich an einer Oberfläche (32) des Koppelelements gebildet sind.

7. Koppelelement nach Anspruch 5 oder 6, **dadurch gekennzeichnet, dass** die abbildenden Spiegel (310; 311', 312') mindestens einer der Reihen jeweils durch einen nach außen konvex gekrümmten Bereich an einer Oberfläche (31) des Koppelelements gebildet sind.

8. Koppelelement nach mindestens einem der vorangehenden Ansprüche, **dadurch gekennzeichnet, dass** die gekrümmten Bereiche (310, 320; 311', 312') jeweils eine Metallisierung aufweisen.

9. Koppelelement nach mindestens einem der vorangehenden Ansprüche, **dadurch gekennzeichnet, dass** die m Reihen von n Spiegelbereichen (310, 320) an mindestens einer Oberfläche (31, 32; 31') des Koppelelements ausgebildet sind.

10. Koppelelement nach Anspruch 9, **dadurch gekennzeichnet , dass** das Koppelelement an einer ersten außenliegenden Oberfläche (32) eine erste Reihe von n Spiegelbereichen (320) und an einer zweiten außenliegenden Oberfläche (31) mindestens eine zweite Reihe von n Spiegelbereichen (310) ausbildet, wobei die Spiegelbereiche (320) der ersten Reihe eine Lichtumlenkung bewirken, ohne dass das Licht in das Koppelelement eintritt und die Spiegelbereiche (320) der zweiten Reihe eine Lichtumlenkung bewirken, nachdem das Licht in das Koppelelement eingetreten ist.

11. Koppelelement nach den Ansprüche 6, 7 und 10, **dadurch gekennzeichnet , dass** die Spiegelbereiche (320) der ersten Reihe jeweils durch einen nach außen konkav gekrümmten Bereich der ersten außenliegenden Oberfläche (32) und die Spiegelbereiche (310) der zweiten Reihe jeweils durch einen nach außen konvex gekrümmten Bereich der zweiten außenliegenden Oberfläche (31) gebildet sind.

12. Koppelelement nach den Ansprüche 7 und 10, **dadurch gekennzeichnet , dass** die Spiegelbereiche der ersten Reihe durch eine ebene Phase (32') der ersten außenliegenden Oberfläche gebildet sind, während die Spiegelbereiche (310) der zweiten Reihe (32) jeweils durch einen nach außen konvex gekrümmten Bereich der zweiten außenliegenden Oberfläche gebildet sind.

13. Koppelelement nach Anspruch 9, **dadurch gekennzeichnet , dass** Koppelelement (3) an einer außenliegenden Oberfläche (31') mindestens zwei beabstandete Reihen von n Spiegelbereichen (311', 312') ausbildet, wobei die Spiegelbereiche jeweils eine Lichtumlenkung bewirken, nachdem das Licht in das Koppelelement eingetreten ist.

14. Koppelelement nach den Ansprüche 7 und 13, **dadurch gekennzeichnet , dass** die Spiegelbereiche (311', 312') jeweils durch einen nach außen konvex gekrümmten Bereich der außenliegenden Oberfläche gebildet sind.

15. Koppelelement nach mindestens einem der vorangehenden Ansprüche, **dadurch gekennzeichnet , dass** das Koppelelement (3) aus einem monolithischen Block besteht.

16. Koppelelement nach mindestens einem der vorangehenden Ansprüche, **dadurch gekennzeichnet, dass** das Koppelelement (3) aus einem transparenten Kunststoff besteht.

17. Koppelelement nach mindestens einem der vorangehenden Ansprüche, **dadurch gekennzeichnet, dass** m gleich zwei und n gleich zwölf ist.

18. Optische Koppelanordnung mit
- einem ersten zweidimensionalen Wellenleiterarray mit mxn Wellenleitern (11, 12),
- einem zweiten zweidimensionalen Wellenleiterarray mit mxn Wellenleitern (21, 22), wobei m≥2 und n≥2 ist und die stirnseitigen Enden der Wellenleiterarrays winklig zueinander angeordnet sind,
**gekennzeichnet durch**
ein Koppelelement (3) zur stirnseitigen optischen Kopplung der Wellenleiter des ersten Wellenleiterarrays mit den Wellenleitern des zweiten Wellenleiterarrays, das gemäß Anspruch 1 ausgebildet ist.

19. Koppelanordnung nach Anspruch 18, **dadurch gekennzeichnet , dass** das erste Wellenleiterarray eine erste ebene Stirnseite (15), das zweite Wellenleiterarry eine zweite ebene Stirnseite (24) und das Koppelelement eine erste Ein-/Auskoppelfläche (33) und eine zweite Ein-/Auskoppelfläche (34) aufweist, wobei die erste Ein-Auskoppelfläche (33) mit der ersten ebenen Stirnseite (15) und die zweite Ein-/Auskoppelfläche (34) mit der zweiten ebenen Stirneite (24) gekoppelt ist.

20. Koppelanordnung nach Anspruch 19, **dadurch gekennzeichnet, dass** zwischen der ersten Ein-/Auskoppelfläche (33) und der ersten ebenen Stirnseite (15) und der zweiten Ein-/Auskoppelfläche (34) und der zweiten ebenen Stirneite (24) jeweils ein Immersionsmittel vorgesehen ist.

21. Koppelanordnung nach mindestens einem der Ansprüche 18 bis 20, **dadurch gekennzeichnet, dass** das Koppelelement (3) als separates Teil ausgebildet ist.

22. Koppelanordnung nach mindestens einem der Ansprüche 18 bis 20, **dadurch gekennzeichnet, dass** das Koppelelement Teil einer Koppeleinheit oder eines Funktionsteils ist, das das erste oder das zweite Wellenleiterarray umfasst.

23. Koppelanordnung nach mindestens einem der Ansprüche 18 bis 22, **dadurch gekennzeichnet, dass** das erste und/oder das zweite Wellenleiterarray realisiert sind in einer optischen Leiterplatte (1), in einem optischen Sende- oder Empfangsmodul mit zweidimensional angeordneten optischen Sendern oder Empfängern oder in einer elektrischen Baugruppe mit mit zweidimensional angeordneten optischen Ein- und/oder Ausgängen.
